# EUROPEAN PATENT APPLICATION

(11) **EP 4 723 781 A1**
(43) Date of publication of application: **08.04.2026**
(21) Application number: 24825252.0
(22) Date of filing: 19.06.2024
(51) Int. Cl.: H04W 72/25

(54) **SIDELINK (SL) POSITIONING AUTHORIZATION METHOD AND APPARATUS, AND MEDIUM**

(30) Priority: 19.06.2023 CN 202310729712
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHANG, Miaoqi, Beijing 100032 (CN); TANG, Xiaoxuan, Beijing 100032 (CN)
(74) Representative: Murgitroyd & Company
(86) International application number: PCT/CN2024/100011
(87) International publication number: WO 2024/260358

(57) **Abstract**

Provided are a sidelink (SL) positioning authorization method, a sidelink (SL) positioning authorization apparatus, and a medium, which belong to the field of communication technology. The SL positioning authorization method is applied to a base station, and includes: receiving a first service authorization indication sent by a first core network function, which indicates SL positioning authorization information of a UE.

## Description

### CROSS-REFERENCE TO RELATED APPLICATION

The present disclosure claims a priority to the Chinese patent application No. 202310729712.6 filed in China on June 19, 2023, a disclosure of which is incorporated herein by reference in its entirety.

### TECHNICAL FIELD

The present disclosure relates to the field of communication technology, and in particular, to a sidelink (SL) positioning authorization method, a sidelink (SL) positioning authorization apparatus and a medium.

### BACKGROUND

In the related art, a positioning architecture is primarily based on a Uu interface positioning solution. However, the Uu interface positioning solution cannot meet a requirement in a scenario where a target User Equipment (UE, also known as a terminal) is not within network coverage. To obtain the location of the target UE, sidelink (SL) positioning needs to be introduced, enabling the use of SL communication links between UEs to assist with positioning in such scenarios.

Typically, there are two resource allocation modes in SL positioning: one is networkarranged resource allocation, and the other is UE autonomous resource selection. If the networkarranged resource allocation mode is adopted, the base station needs to obtain service authentication information for SL positioning. In the related art, the base station cannot obtain SL positioning configuration of the UE and thus cannot allocate resources to the UE, rendering SL positioning infeasible.

### SUMMARY

The technical problem to be solved by the present disclosure is to provide a sidelink (SL) positioning authorization method, a sidelink (SL) positioning authorization apparatus, and a medium, which can enable sidelink positioning.

To solve the above technical problem, embodiments of the present disclosure provide the following technical solution.

A sidelink (SL) positioning authorization method is provided, which is applied to a User Equipment (UE) and includes:
sending, by the UE, first capability information to a first core network function, wherein the first capability information indicates that the UE supports SL positioning.

In some embodiments, the first capability information further includes any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

In some embodiments, the first capability information is sent by the UE after the UE enters a valid area.

In some embodiments, the valid area is configured by a network side or by the UE.

In some embodiments, a size of the valid area is determined by a capability type of the UE, or by a distance between the UE and a base station, or by a signal strength measured by the UE.

An embodiment of the present disclosure further provides a sidelink (SL) positioning authorization method, applied to a first core network function, including:
receiving, by the first core network function, first capability information sent by a User Equipment (UE), wherein the first capability information indicates that the UE supports SL positioning;
authenticating, by the first core network function, the first capability information of the UE, and sending, by the first core network function, a first service authorization indication to a base station to indicate SL positioning authorization information of the UE.

In some embodiments, the first capability information further includes any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

In some embodiments, the first capability information is sent by the UE after the UE enters a valid area.

In some embodiments, the valid area is configured by a network side or by the UE.

In some embodiments, a size of the valid area is determined by a capability type of the UE, or by a distance between the UE and the base station, or by a signal strength measured by the UE.

In some embodiments, the method further includes:
sending, by the first core network function, location information of the valid area to the base station.

In some embodiments, the method further includes:
in the case that the UE is authorized for an SL positioning, sending, by the first core network function, an authorization type of the UE to a target base station, wherein the authorization type includes any one of the following:
an anchor UE in SL positioning;
a target UE in SL positioning;
a serving UE in SL positioning;
both an anchor UE and a target UE in SL positioning;
both an anchor UE and a serving UE in SL positioning;
both a target UE and a serving UE in SL positioning; or
an anchor UE, a target UE and a serving UE in SL positioning.

In some embodiments, the method further includes:
in the case that the UE is authorized for an SL positioning, sending, by the first core network function to a target base station, at least one of the following:
Quality of Service (QoS) parameters for the SL positioning;
QoS parameters for SL communication between UEs for SL positioning;
a User Equipment-Aggregate Maximum Bit Rate (UE -AMBR) on a PC5 interface; or
cross-Radio Access Technology (cross-RAT) PC5 control authorization.

In some embodiments, the method further includes:
in the case that the UE is authorized for an SL positioning, when a Next Generation (NG) interface handover occurs at the UE, sending a handover request to a target base station, wherein the handover request carries at least one of the following:
a service authorization indication;
location information of the valid area;
QoS parameters for the SL positioning;
QoS parameters for SL communication between UEs for SL positioning;
a UE-AMBR on a PC5 interface; or
cross-RAT PC5 control authorization.

In some embodiments, the QoS parameters for the SL positioning includes at least one of the following:
absolute or relative horizontal positioning accuracy;
a vertical coordinate request;
absolute or relative vertical positioning accuracy;
a response time; or
a velocity request.

In some embodiments, the QoS parameters for the SL positioning further includes at least one of the following:
a 5G QoS Identifier (5QI);
an Allocation and Retention Priority (ARP);
a maximum packet loss rate;
a QoS notification mechanism; or
a Guaranteed Flow Bit Rate (GFBR) and a Maximum Flow Bit Rate (MFBR) for each Guaranteed Bit Rate (GBR) QoS flow.

An embodiment of the present disclosure further provides a sidelink (SL) positioning authorization method, applied to a base station, the method including:
receiving, by the base station, a first service authorization indication sent by a first core network function, wherein the first service authorization indication indicates SL positioning authorization information of the UE.

In some embodiments, the method further includes:
receiving location information of a valid area sent by the first core network function.

In some embodiments, the method further includes:
in the case that the UE is authorized for SL positioning, receiving from the first core network function at least one of the following:
Quality of Service (QoS) parameters for an SL positioning;
QoS parameters for SL communication between UEs for SL positioning;
a User Equipment-Aggregate Maximum Bit Rate (UE-AMBR) on a PC5 interface; or
cross-Radio Access Technology (cross-RAT) PC5 control authorization.

In some embodiments, the method further includes:
in the case that the UE is authorized for SL positioning, when an Xn handover occurs at the UE, sending a handover request to a target base station, wherein the handover request carries at least one of the following:
a service authorization indication;
location information of a valid area;
QoS parameters for an SL positioning;
QoS parameters for SL communication between UEs for SL positioning;
a UE-AMBR on a PC5 interface; or
cross-RAT PC5 control authorization.

An embodiment of the present disclosure further provides a sidelink (SL) positioning authorization apparatus, applied to a User Equipment (UE), including a transceiver and a processor, wherein
the transceiver is configured to send first capability information to a first core network function, and the first capability information indicates that the UE supports SL positioning.

An embodiment of the present disclosure further provides a sidelink (SL) positioning authorization apparatus, applied to a first core network function, including a transceiver and a processor, wherein
the transceiver is configured to receive first capability information sent by the UE, and the first capability information indicates that the UE supports SL positioning;
the processor is configured to authenticate the first capability information of the UE, and send a first service authorization indication to a base station to indicate SL positioning authorization information of the UE.

An embodiment of the present disclosure further provides a sidelink (SL) positioning authorization apparatus, applied to a base station, including a transceiver and a processor, wherein
the transceiver is configured to receive a first service authorization indication sent by a first core network function, wherein the first service authorization indication indicates SL positioning authorization information of the UE.

An embodiment of the present disclosure further provides a sidelink (SL) positioning authorization apparatus, including a memory, a processor, and a computer program stored in the memory and used to be executed by the processor; wherein the processor is configured to execute the program to implement the steps of the SL positioning authorization method as described above.

An embodiment of the present disclosure further provides a computer-readable storage medium storing a computer program, wherein the program is used to be executed by a processor to implement the steps of the sidelink (SL) positioning authorization method as described above.

The embodiments of the present disclosure achieve the following beneficial effects:
in the above solution, the UE sends its SL positioning capability to the first core network function; the first core network function determines, based on the capability reported by the UE, whether the UE is authorized for SL positioning; in the case that the UE is authorized for the SL positioning, the first core network function indicates the SL positioning authorization information of the UE to the base station. In this way, the base station can obtain the authentication indication for the UE from the core network, enabling the base station to determine whether the joined UE is eligible to receive SL positioning configuration; subsequently, the base station can allocate resources to the UE, thereby enabling SL positioning.

### BRIEF DESCRIPTION OF THE DRAWINGS

FIG. 1 is a schematic flowchart diagram of a positioning solution in the related art;
FIG. 2 is a schematic diagram of a network coverage scenario;
FIG. 3 is another schematic diagram of a network coverage scenario;
FIG. 4 is yet another schematic diagram of a network coverage scenario;
FIG. 5 is a schematic flowchart of a sidelink (SL) positioning authorization method according to an embodiment of the present disclosure;
FIG. 6 is another schematic flowchart of an SL positioning authorization method according to an embodiment of the present disclosure;
FIG. 7 is yet another schematic flowchart of an SL positioning authorization method according to an embodiment of the present disclosure;
FIG. 8 is a schematic structural diagram of an SL positioning authorization apparatus according to an embodiment of the present disclosure;
FIG. 9 is a schematic diagram illustrating the composition of an SL positioning authorization apparatus according to an embodiment of the present disclosure.

### DETAILED DESCRIPTION

To make the technical problems to be solved, technical solutions, and advantages of the embodiments of the present disclosure clearer, the following detailed description will be provided in conjunction with the accompanying drawings and specific embodiments.

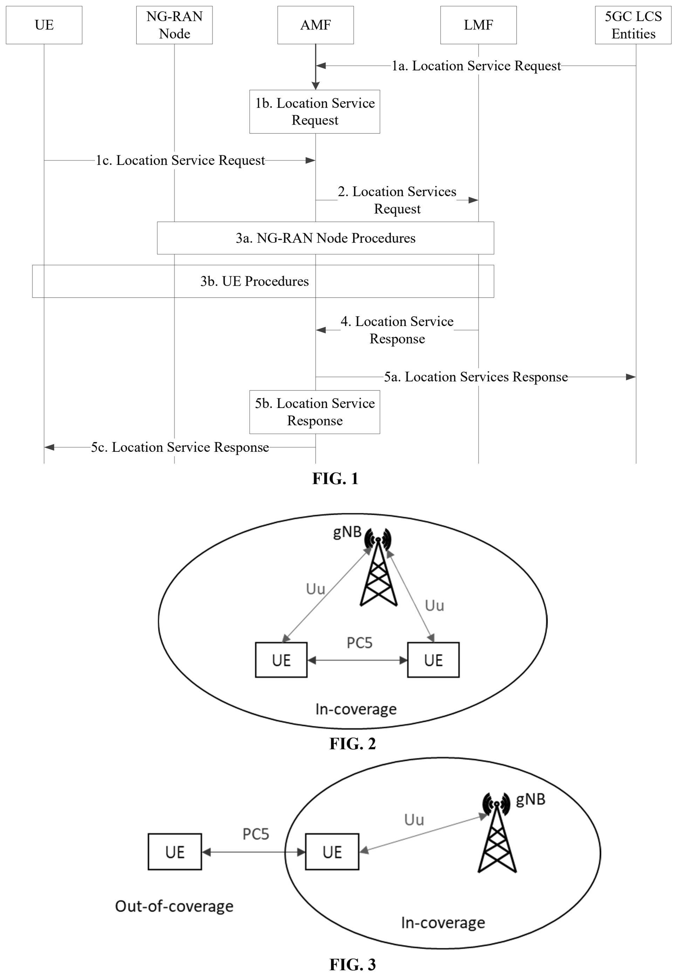

In the relevant positioning technology architecture, the Access and Mobility Management Function (AMF) may receive a positioning request for a target UE from other entities (such as a Gateway Mobile Location Centre (GMLC) or a User Equipment (UE)). Alternatively, the AMF may autonomously decide to initiate a positioning service for the target UE upon receiving an emergency call from the UE. Subsequently, the AMF sends a positioning service request to the Location Management Function (LMF), which processes the positioning service request and either locates the UE or provides auxiliary information to assist the UE in positioning or measurement. After obtaining the positioning result, the LMF sends it to the AMF. If the positioning service is not initiated by the AMF, the AMF returns the positioning result to the entity that initiated the positioning service. The specific process is shown in FIG. 1.

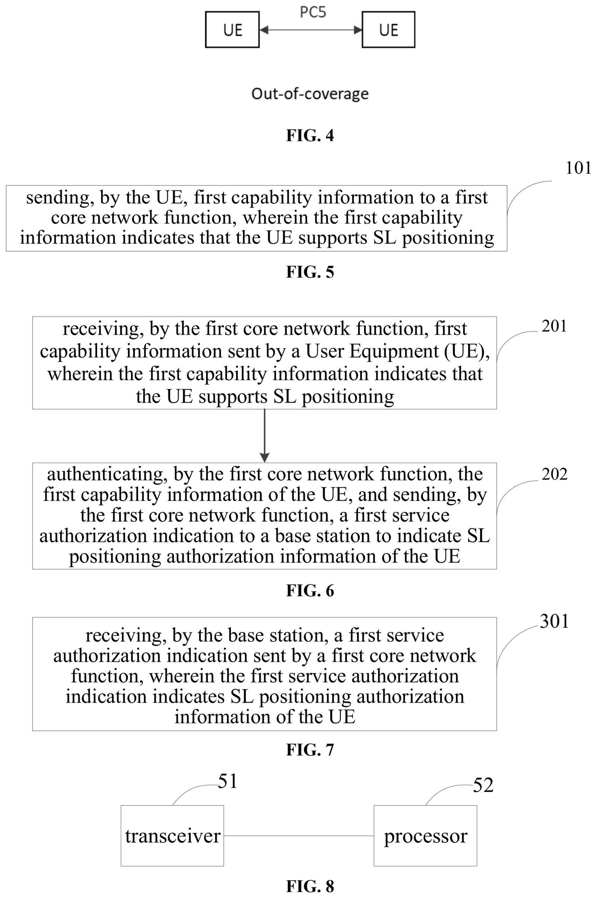

Currently, positioning for Vehicle-to-Everything (V2X) and positioning for public safety are among the main positioning use cases in 5G. The positioning for V2X and public safety primarily includes three network coverage scenarios: In-Coverage (IC), Out-Of-Coverage (OOC), and Partial Coverage (PC). The in-coverage scenario refers to a situation where all users (UEs) are within network coverage. The partial coverage scenario refers to a situation where at least one UE is under network coverage while the remaining UEs are out of network coverage. The out-of-coverage scenario refers to a situation where none of the UEs are under network coverage. These three coverage scenarios are illustrated in FIGs. 2 to 4, where FIG. 2 is a schematic diagram of the in-coverage scenario, FIG. 3 is a schematic diagram of the partial coverage scenario, and FIG. 4 is a schematic diagram of the out-of-coverage scenario.

The communication interface between a UE and a base station is a Uu interface, and the communication interface between UEs is a PC5 interface. The Uu interface, the PC5 interface, or a combination of both constitutes the wireless link in positioning. The Uu interface is used in in-coverage and partial coverage scenarios, while the PC5 interface can be used in all three scenarios mentioned above.

Currently, there is no mechanism to support a core network in notifying the base station about service authentication indications and parameters for SL positioning. If the base station cannot obtain the authentication indications for the UE from the core network, the base station cannot determine whether the joined UE is eligible to receive SL positioning configuration. As a result, the base station cannot allocate resources to the UE, rendering SL positioning infeasible. If the base station cannot obtain the SL positioning Quality of Service (QoS) and SL positioning transmission QoS parameters for the UE from the core network, the base station will not be able to obtain the priority of data services, nor can it perform more granular scheduling and management of data services.

An embodiment of the present disclosure provides a sidelink (SL) positioning authorization method, a sidelink (SL) positioning authorization apparatus, and a medium that can enable sidelink positioning.

An embodiment of the present disclosure provides an SL positioning authorization method applied to a UE. As shown in FIG. 5, the method includes:
step 101: sending, by the UE, first capability information to a first core network function, wherein the first capability information indicates that the UE supports SL positioning.

In this embodiment, the UE sends its SL positioning capability to the first core network function. The first core network function can then determine, based on the capability reported by the UE, whether the UE is authorized for SL positioning. In the case that the UE is authorized for the SL positioning, the first core network function indicates SL positioning authorization information of the UE to the base station. In this way, the base station can obtain the authentication indication for the UE from the core network, enabling the base station to determine whether the joined UE is eligible to receive SL positioning configuration. Subsequently, the base station can allocate resources to the UE, thereby enabling SL positioning.

In this embodiment, during a registration phase when the UE initiates a registration request, the UE may transparently include its capability of supporting SL positioning in a registration request message. The first capability information may be carried in the 5GS Mobility Management (5GMM) capability Information Element (IE) or the UE Mobility Management (MM) core network capability IE, or in a new IE.

In some embodiments, in addition to including information indicating that the UE supports SL positioning, the first capability information further includes any of the following:
the UE supports acting as an anchor UE in SL positioning;
the UE supports acting as a target UE in SL positioning;
the UE supports serving as a server UE in SL positioning, which refers to a UE selected from multiple UEs and possessing functionality similar to that of an LMF, requiring PC5 connections with all UEs;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

In this way, in the case that the first core network function determines that the UE is authorized for SL positioning, the first core network function can determine the role that the UE is authorized to play in SL positioning based on the first capability information, thereby assisting the base station in resource allocation for the UE.

In some embodiments, the first capability information is sent by the UE after the UE enters a valid area. Within this valid area, the SL capability reported by the UE remains unchanged. When the UE moves outside the range of this valid area, the UE may re-initiate authentication with the network side to update and report the SL capability supported by the UE.

In some embodiments, the valid area is configured by the network side or by the UE. The network side may be a base station or a core network function. When the valid area is configured by the core network function, the scope of the valid area may be defined as an area determined by the core network function. The valid area may be characterized as a circular area centered at the current location of the UE, with a radius defined by the core network function, or as an area centered at the current location of the base station. This valid area may be configured to a uniform size for all UEs, or different sizes of valid areas may be configured for UEs with different capability types according to their respective capabilities. When the UE moves out of the current valid area, it can trigger an authentication update and report the SL capability supported by the UE. If the UE previously reported its capability as an anchor UE but can no longer serve as one due to a change in location or an increased distance from other UEs, the UE needs to report to the core network function that it now supports acting as a target UE. The core network function sends the location information of the valid area to the base station. This location information may be an effective radius of the valid area (centered on the UE or the base station) or coordinate information of the valid area (centered on the base station).

When the valid area is configured by the UE, the size of this valid area may be determined by the UE based on its own location coordinates and distance from the base station. When the UE detects that it has moved outside the range of a certain valid area, it can proactively initiate an authentication update and report the SL capability supported by the UE to the network side. The size of the valid area may also be determined by a signal strength measured by the UE, where the measured quantities include at least one of the following: Reference Signal Received Power (RSRP), Reference Signal Received Quality (RSRQ), Signal-to-noise and interference ratio (SINR), or Received Signal Strength Indication (RSSI).

An embodiment of the present disclosure further provides a sidelink (SL) positioning authorization method. As shown in FIG. 6, the method is applied to a first core network function and includes:
step 201: receiving, by the first core network function, first capability information sent by a User Equipment (UE), wherein the first capability information indicates that the UE supports SL positioning;
step 202: authenticating, by the first core network function, the first capability information of the UE, and sending, by the first core network function, a first service authorization indication to a base station to indicate SL positioning authorization information of the UE.

The first service authorization indication may indicate whether the UE is authorized or not authorized for an SL positioning.

In this embodiment, the UE sends its SL positioning capability to the first core network function. The first core network function can then determine, based on the capability reported by the UE, whether the UE is authorized for the SL positioning. In the case that the UE is authorized for the SL positioning, the first core network function indicates SL positioning authorization information of the UE to the base station. In this way, the base station can obtain the authentication indication for the UE from the core network, enabling the base station to determine whether the joined UE is eligible to receive SL positioning configuration. Subsequently, the base station can allocate resources to the UE, thereby enabling SL positioning.

In this embodiment, during a registration phase when the UE initiates a registration request, the UE may transparently include its capability of supporting SL positioning in a registration request message. The first capability information may be carried in the 5GMM capability IE or the UE MM core network capability IE, or in a new IE.

The first core network function may be an AMF. After receiving the registration request message transparently transmitted from the UE, the first core network function (AMF) determines whether the UE can be authorized for SL positioning based on the SL positioning data in user subscription information provided by the Unified Data Management (UDM) entity and the capability reported by the UE. At the same time, the AMF stores the authorization information and sends a service authorization indication to the base station. This service authorization indication may be "UE is authorized to SL positioning", "SL positioning is authorized", "UE is not authorized to SL positioning", or "SL positioning is not authorized", etc.

In some embodiments, the first capability information further includes any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

In this way, in the case that the first core network function determines that the UE is authorized for SL positioning, it can determine the role that the UE is authorized to play in SL positioning based on the first capability information, thereby assisting the base station in resource allocation for the UE.

Within this valid area, the SL capability reported by the UE remains unchanged. When the UE moves outside the range of this valid area, the UE may re-initiate authentication with the network side to update and report the SL capability supported by the UE.

In some embodiments, the valid area is configured by the network side or by the UE. The network side may be a base station or a core network function. When the valid area is configured by the core network function, the scope of the valid area may be defined as an area determined by the core network function. The valid area may be characterized as a circular area centered at the current location of the UE, with a radius defined by the core network function, or as an area centered at the current location of the base station. This valid area may be configured to a uniform size for all UEs, or different sizes of valid areas may be configured for UEs with different capability types according to their respective capabilities. When the UE moves out of the current valid area, it can trigger an authentication update and report the SL capability supported by the UE. If the UE previously reported its capability as an anchor UE but can no longer serve as one due to a change in location or an increased distance from other UEs, the UE needs to report to the core network function that it now supports acting as a target UE. The core network function sends the location information of the valid area to the base station. This location information may be an effective radius of the valid area (centered on the UE or the base station) or coordinate information of the valid area (centered on the base station).

When the valid area is configured by the UE, the size of this valid area may be determined by the UE based on its own location coordinates and distance from the base station. When the UE detects that it has moved outside a range of a certain valid area, it can proactively initiate an authentication update and report the SL capability supported by the UE to the network side. The size of the valid area may also be determined by a signal strength measured by the UE, where the measured quantities include at least one of the following: Reference Signal Received Power (RSRP), Reference Signal Received Quality (RSRQ), Signal-to-noise and interference ratio (SINR), or Received Signal Strength Indication (RSSI).

In some embodiments, the method further includes:
in the case that the UE is authorized for an SL positioning, sending, by the first core network function, an authorization type of the UE to a target base station, wherein the authorization type includes any one of the following:
an anchor UE in SL positioning;
a target UE in SL positioning;
a serving UE in SL positioning;
both an anchor UE and a target UE in SL positioning;
both an anchor UE and a serving UE in SL positioning;
both a target UE and a serving UE in SL positioning; or
an anchor UE, a target UE and a serving UE in SL positioning.

In this embodiment, before sending the authorization type of the UE, the first core network function may determine the authorization type of the UE.

In some embodiments, the method further includes:
in the case that the UE is not authorized for the SL positioning, the first core network function sends an indication message to the target base station indicating that the UE does not support the SL positioning.

In some embodiments, the method further includes:
in the case that the UE is authorized for an SL positioning, sending, by the first core network function to a target base station, at least one of the following:
Quality of Service (QoS) parameters for the SL positioning;
QoS parameters for SL communication between UEs for SL positioning;
a User Equipment-Aggregate Maximum Bit Rate (UE -AMBR) on a PC5 interface; or
cross-Radio Access Technology (cross-RAT) PC5 control authorization.

It should be noted that sidelink (SL) communication refers to direct communication between UEs via the PC5 interface. SL positioning is based on the sidelink signal sent between UEs via the PC5 interface. The SL communication between UEs in SL positioning refers to the transmission of SL signals between UEs via the PC5 interface, which is the signal transmission for SL positioning. The QoS parameters for SL communication between UEs for SL positioning may also be referred to as SL positioning transmission QoS parameters. These parameters can be used by the base station to allocate appropriate resource between UEs that support SL positioning.

In some embodiments, the QoS parameters for the SL positioning includes at least one of the following:
absolute or relative horizontal positioning accuracy;
a vertical coordinate request;
absolute or relative vertical positioning accuracy;
a response time; or
a velocity request.

In some embodiments, the QoS parameters for the SL positioning further includes at least one of the following:
a 5G QoS Identifier (5QI);
an Allocation and Retention Priority (ARP);
a maximum packet loss rate;
a QoS notification mechanism; or
a Guaranteed Flow Bit Rate (GFBR) and a Maximum Flow Bit Rate (MFBR) for each Guaranteed Bit Rate (GBR) QoS flow.

Based on the SL positioning QoS parameter sent by a Policy Control Function (PCF), the AMF can send SL QoS parameters for positioning to the base station. The SL QoS parameters include absolute or relative horizontal positioning accuracy, a vertical coordinate request (i.e., whether a vertical coordinate need to be introduced), absolute or relative vertical positioning accuracy, a response time, and a velocity request (i.e., whether velocity needs to be introduced). Additionally, the parameters also include 5QI, ARP, maximum packet loss rate, QoS notification mechanism, as well as the Guaranteed Flow Bit Rate (GFBR) and Maximum Flow Bit Rate (MFBR) for each Guaranteed Bit Rate (GBR) QoS flow. After obtaining the QoS parameters, the base station can determine which positioning services require high accuracy, or are sensitive to latency, or require guaranteed packet loss rates, and can prioritize the processing of such services.

Furthermore, based on the user subscription information sent by the UDM, the AMF can also send the UE-AMBR for the UE on the PC5 interface to the base station, that is, the aggregate bit rate that can be expected to be provided for all non-Guaranteed Bit Rate (non-GBR) QoS flows within a single UE on the PC5 interface. Additionally, the AMF can also send cross-RAT PC5 control authorization to the base station, enabling the base station to manage resources for the content transmitted by the UE over the SLP PC5. This authorization indicates, in a network-scheduled resource allocation mode, whether a Long Term Evolution (LTE) base station is capable of scheduling content transmitted over the LTE PC5 and/or New Radio (NR) PC5 interfaces within its coverage area, and whether the NR base station is capable of scheduling content transmitted over the LTE PC5 and/or NR PC5 interfaces within its coverage area.

In some embodiments, the method further includes:
in the case that the UE is authorized for an SL positioning, when a Next Generation (NG) interface handover occurs at the UE, sending a handover request to a target base station, wherein the handover request carries at least one of the following:
a service authorization indication;
location information of the valid area;
QoS parameters for the SL positioning;
QoS parameters for SL communication between UEs for SL positioning;
a UE-AMBR on a PC5 interface; or
cross-RAT PC5 control authorization.

In this embodiment, for the scenario where the UE undergoes an NG handover, the AMF (or the target AMF in the case of an inter-AMF handover) needs to send a handover request signaling to the target base station, carrying a service authorization indication message, valid area information, UE-AMBR for the PC5 interface, cross-RAT PC5 control authorization, and SL positioning QoS parameters. This enables the target base station to determine whether the joined UE is eligible to receive SL positioning configuration. Subsequently, the target base station can allocate resources to the UE, thereby enabling SL positioning.

An embodiment of the present disclosure further provides a sidelink (SL) positioning authorization method applied to a base station. As shown in FIG. 7, the method includes:
step 301: receiving, by the base station, a first service authorization indication sent by a first core network function, wherein the first service authorization indication indicates SL positioning authorization information of the UE.

In this embodiment, the base station can obtain the authentication indication for the UE from the core network, enabling it to determine whether the joined UE is eligible to receive SL positioning configuration. Subsequently, the base station can allocate resources to the UE, thereby enabling SL positioning.

The UE may not be authorized for the SL positioning. The first service authorization indication can indicate whether the UE is authorized or not. When the UE is not authorized for the SL positioning, the base station will initiate a process to prevent the UE from accessing the SL positioning.

In some embodiments, the method further includes:
receiving location information of a valid area sent by the first core network function.

In some embodiments, the valid area is configured by the network side or by the UE. When the valid area is configured by the core network function, the scope of the valid area may be defined as an area determined by the core network function. The valid area may be characterized as a circular area centered at the current location of the UE, with a radius defined by the core network function, or as an area centered at the current location of the base station. This valid area may be configured to a uniform size for all UEs, or different sizes of valid areas may be configured for UEs with different capability types according to their respective capabilities. When the UE moves out of the current valid area, it can trigger an authentication update and report the SL capability supported by the UE. If the UE previously reported its capability as an anchor UE but can no longer serve as one due to a change in location or an increased distance from other UEs, the UE needs to report to the core network function that it now supports acting as a target UE. The core network function sends the location information of the valid area to the base station. This location information may be an effective radius of the valid area (centered on the UE or the base station) or coordinate information of the valid area (centered on the base station).

When the valid area is configured by the UE, the size of this valid area may be determined by the UE based on its own location coordinates and distance from the base station. Within this valid area, the SL capability reported by the UE remains unchanged. When the UE moves outside the range of this valid area, the UE may re-initiate authentication with the network side to update and report the SL capability supported by the UE. The size of the valid area may also be determined by a signal strength measured by the UE, where the measured quantities include at least one of the following: Reference Signal Received Power (RSRP), Reference Signal Received Quality (RSRQ), Signal-to-noise and interference ratio (SINR), or Received Signal Strength Indication (RSSI).

In some embodiments, the method further includes:
in the case that the UE is authorized for SL positioning, receiving from the first core network function at least one of the following:
Quality of Service (QoS) parameters for an SL positioning;
QoS parameters for SL communication between UEs for SL positioning;
a User Equipment-Aggregate Maximum Bit Rate (UE-AMBR) on a PC5 interface; or
cross-Radio Access Technology (cross-RAT) PC5 control authorization.

After obtaining the QoS parameters, the base station can determine which positioning services require high accuracy, or are sensitive to latency, or require guaranteed packet loss rates, and can prioritize the processing of such services. After obtaining the UE-AMBR for the PC5 interface, the base station can allocate resources to the UE based on the UE-A MBR. The cross-RAT PC5 control authorization allows the base station to manage resources for the content transmitted by the UE on the SLP PC5. This authorization indicates, in a network-scheduled resource allocation mode, whether a Long Term Evolution (LTE) base station is capable of scheduling content transmitted over the LTE PC5 and/or NR PC5 interfaces within its coverage area, and whether the NR base station is capable of scheduling content transmitted over the LTE PC5 and/or NR PC5 interfaces within its coverage area.

In some embodiments, the method further includes:
in the case that the UE is authorized for SL positioning, when an Xn handover occurs at the UE, sending a handover request to a target base station, wherein the handover request carries at least one of the following:
a service authorization indication;
location information of a valid area;
QoS parameters for an SL positioning;
QoS parameters for SL communication between UEs for SL positioning;
a UE-AMBR on a PC5 interface; or
cross-RAT PC5 control authorization.

In this embodiment, for the scenario where the UE undergoes an Xn handover, a source base station needs to send a handover request signaling to the target base station, carrying a service authorization indication message, valid area information, UE-AMBR for the PC5 interface, cross-RAT PC5 control authorization, and SL positioning QoS parameters. This enables the target base station to determine whether the joined UE is eligible to receive SL positioning configuration. Subsequently, the target base station can allocate resources to the UE, thereby enabling SL positioning.

An embodiment of the present disclosure further provides a sidelink (SL) positioning authorization apparatus applied to a UE. As shown in FIG. 8, the apparatus includes a transceiver 51 and a processor 52, wherein
the transceiver 51 is configured to send first capability information to a first core network function, wherein the first capability information indicates that the UE supports SL positioning.

In some embodiments, the first capability information further includes any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

In some embodiments, the first capability information is sent by the UE after the UE enters a valid area.

In some embodiments, the valid area is configured by a network side or by the UE.

In some embodiments, a size of the valid area is determined by a capability type of the UE, or by a distance between the UE and a base station, or by a signal strength measured by the UE.

An embodiment of the present disclosure further provides a sidelink (SL) positioning authorization apparatus applied to a first core network function. As shown in FIG. 8, the apparatus includes a transceiver 51 and a processor 52, wherein
the transceiver 51 is configured to receive first capability information sent by the UE, and the first capability information indicates that the UE supports SL positioning;
the processor 52 is configured to authenticate the first capability information of the UE, and send a first service authorization indication to a base station to indicate SL positioning authorization information of the UE.

In some embodiments, the first capability information further includes any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

In some embodiments, the first capability information is sent by the UE after the UE enters a valid area.

In some embodiments, the valid area is configured by a network side or by the UE.

In some embodiments, a size of the valid area is determined by a capability type of the UE, or by a distance between the UE and the base station, or by a signal strength measured by the UE.

In some embodiments, the transceiver 51 is further configured to send location information of the valid area to the base station.

In some embodiments, the transceiver 51 is further configured to, in the case that the UE is authorized for an SL positioning, send an authorization type of the UE to a target base station, wherein the authorization type includes any one of the following:
an anchor UE in SL positioning;
a target UE in SL positioning;
a serving UE in SL positioning;
both an anchor UE and a target UE in SL positioning;
both an anchor UE and a serving UE in SL positioning;
both a target UE and a serving UE in SL positioning; or
an anchor UE, a target UE and a serving UE in SL positioning.

In some embodiments, in the case that the UE is authorized for an SL positioning, the transceiver 51 is further configured to send at least one of the following to the base station:
Quality of Service (QoS) parameters for the SL positioning;
QoS parameters for SL communication between UEs for SL positioning;
a User Equipment-Aggregate Maximum Bit Rate (UE -AMBR) on a PC5 interface; or
cross-Radio Access Technology (cross-RAT) PC5 control authorization.

In some embodiments, in the case that the first core network function authorizes the UE for an SL positioning, the transceiver 51 is further configured to, when a Next Generation (NG) interface handover occurs at the UE, send a handover request to a target base station, wherein the handover request carries at least one of the following:
a service authorization indication;
location information of the valid area;
QoS parameters for the SL positioning;
QoS parameters for SL communication between UEs for SL positioning;
a UE-AMBR on a PC5 interface; or
cross-RAT PC5 control authorization.

In some embodiments, the QoS parameters for the SL positioning includes at least one of the following:
absolute or relative horizontal positioning accuracy;
a vertical coordinate request;
absolute or relative vertical positioning accuracy;
a response time; or
a velocity request.

In some embodiments, the QoS parameters for the SL positioning further includes at least one of the following:
a 5G QoS Identifier (5QI);
an Allocation and Retention Priority (ARP);
a maximum packet loss rate;
a QoS notification mechanism; or
a Guaranteed Flow Bit Rate (GFBR) and a Maximum Flow Bit Rate (MFBR) for each Guaranteed Bit Rate (GBR) QoS flow.

An embodiment of the present disclosure further provides a sidelink (SL) positioning authorization apparatus applied to a base station. As shown in FIG. 8, the apparatus includes a transceiver 51 and a processor 52.

The transceiver 51 is configured to receive a first service authorization indication sent by a first core network function, wherein the first service authorization indication indicates SL positioning authorization information of the UE.

In some embodiments, the transceiver 51 is further configured to receive location information of a valid area sent by the first core network function.

In some embodiments, in the case that the UE is authorized for SL positioning, the transceiver 51 is further configured to receive from the first core network function at least one of the following:
Quality of Service (QoS) parameters for an SL positioning;
QoS parameters for SL communication between UEs for SL positioning;
a User Equipment-Aggregate Maximum Bit Rate (UE-AMBR) on a PC5 interface; or
cross-Radio Access Technology (cross-RAT) PC5 control authorization.

In some embodiments, in the case that the UE is authorized for SL positioning, the transceiver 51 is further configured to, when an Xn handover occurs at the UE, send a handover request to a target base station, wherein the handover request carries at least one of the following:
a service authorization indication;
location information of a valid area;
QoS parameters for an SL positioning;
QoS parameters for SL communication between UEs for SL positioning;
a UE-AMBR on a PC5 interface; or
cross-RAT PC5 control authorization.

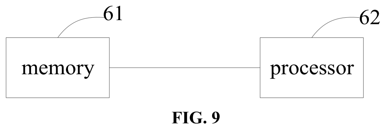

An embodiment of the present disclosure further provides a sidelink (SL) positioning authorization apparatus. As shown in FIG. 9, the apparatus includes a memory 61, a processor 62, and a computer program stored in the memory 61 and used to be executed by the processor 62; wherein the processor 62 is configured to execute the program to implement the steps of the SL positioning authorization method as described above.

An embodiment of the present disclosure further provides a computer-readable storage medium storing a computer program, wherein the program is used to be executed by a processor to implement the steps of the sidelink (SL) positioning authorization method as described above.

A computer-readable medium includes both permanent and non-permanent, removable and non-removable media that can be implemented in any method or technology for information storage. The information may be computer-readable instructions, data structures, program modules, or other data. Examples of computer storage media include, but are not limited to, Phase-Change Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or other memory technologies, Compact Disc Read-Only Memory (CD-ROM), Digital Video Disc (DVD) or other optical storage, magnetic cassettes, magnetic tape, magnetic disk storage or other magnetic storage devices, or any other non-transitory medium that can be used to store information that can be accessed by a computing to-be-detected UE device. As defined herein, computer-readable media do not include transitory media, such as modulated data signals and carrier waves.

The above are preferred embodiments of the present disclosure. It should be noted that, for those skilled in the art, various improvements and modifications may be made without departing from the principles of the present disclosure, and these improvements and modifications should also be considered within the protection scope of the present disclosure.

## Claims

1. A sidelink (SL) positioning authorization method, applied to a User Equipment (UE), the method comprising:
sending, by the UE, first capability information to a first core network function, wherein the first capability information indicates that the UE supports SL positioning.

2. The method according to claim 1, wherein the first capability information further comprises any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

3. The method according to claim 1, wherein the first capability information is sent by the UE after the UE enters a valid area.

4. The method according to claim 3, wherein the valid area is configured by a network side or by the UE.

5. The method according to claim 4, wherein a size of the valid area is determined by a capability type of the UE, or by a distance between the UE and a base station, or by a signal strength measured by the UE.

6. A sidelink (SL) positioning authorization method, applied to a first core network function, comprising:
receiving, by the first core network function, first capability information sent by a User Equipment (UE), wherein the first capability information indicates that the UE supports SL positioning;
authenticating, by the first core network function, the first capability information of the UE, and sending, by the first core network function, a first service authorization indication to a base station to indicate SL positioning authorization information of the UE.

7. The method according to claim 6, wherein the first capability information further comprises any one of the following:
the UE supports acting as an anchor UE in SL positioning;
the UE supports acting as a target UE in SL positioning;
the UE supports acting as a serving UE in SL positioning;
the UE supports acting as both an anchor UE and a target UE in SL positioning;
the UE supports acting as both an anchor UE and a serving UE in SL positioning;
the UE supports acting as both a target UE and a serving UE in SL positioning; or
the UE supports acting as an anchor UE, a target UE, and a serving UE in SL positioning.

8. The method according to claim 6, wherein the first capability information is sent by the UE after the UE enters a valid area.

9. The method according to claim 8, wherein the valid area is configured by a network side or by the UE.

10. The method according to claim 8, wherein a size of the valid area is determined by a capability type of the UE, or by a distance between the UE and the base station, or by a signal strength measured by the UE.

11. The method according to claim 8, further comprising:
sending, by the first core network function, location information of the valid area to the base station.

12. The method according to claim 6, further comprising:
in the case that the UE is authorized for an SL positioning, sending, by the first core network function, an authorization type of the UE to a target base station, wherein the authorization type comprises any one of the following:
an anchor UE in SL positioning;
a target UE in SL positioning;
a serving UE in SL positioning;
both an anchor UE and a target UE in SL positioning;
both an anchor UE and a serving UE in SL positioning;
both a target UE and a serving UE in SL positioning; or
an anchor UE, a target UE and a serving UE in SL positioning.

13. The method according to claim 6, further comprising:
in the case that the UE is authorized for an SL positioning, sending, by the first core network function to a target base station, at least one of the following:
Quality of Service (QoS) parameters for the SL positioning;
QoS parameters for SL communication between UEs for SL positioning;
a User Equipment-Aggregate Maximum Bit Rate (UE-AMBR) on a PC5 interface; or
cross-Radio Access Technology (cross-RAT) PC5 control authorization.

14. The method according to claim 6, further comprising:
in the case that the UE is authorized for an SL positioning, when a Next Generation (NG) interface handover occurs at the UE, sending a handover request to a target base station, wherein the handover request carries at least one of the following:
a service authorization indication;
location information of the valid area;
QoS parameters for the SL positioning;
QoS parameters for SL communication between UEs for SL positioning;
a UE-AMBR on a PC5 interface; or
cross-RAT PC5 control authorization.

15. The method according to claim 13 or 14, wherein the QoS parameters for the SL positioning comprise at least one of the following:
absolute or relative horizontal positioning accuracy;
a vertical coordinate request;
absolute or relative vertical positioning accuracy;
a response time; or
a velocity request.

16. The method according to claim 15, wherein the QoS parameters for the SL positioning further comprises at least one of the following:
a 5G QoS Identifier (5QI);
an Allocation and Retention Priority (ARP);
a maximum packet loss rate;
a QoS notification mechanism; or
a Guaranteed Flow Bit Rate (GFBR) and a Maximum Flow Bit Rate (MFBR) for each Guaranteed Bit Rate (GBR) QoS flow.

17. A sidelink (SL) positioning authorization method, applied to a base station, the method comprising:
receiving, by the base station, a first service authorization indication sent by a first core network function, wherein the first service authorization indication indicates SL positioning authorization information of the UE.

18. The method according to claim 17, further comprising:
receiving location information of a valid area sent by the first core network function.

19. The method according to claim 17, further comprising:
in the case that the UE is authorized for SL positioning, receiving from the first core network function at least one of the following:
Quality of Service (QoS) parameters for an SL positioning;
QoS parameters for SL communication between UEs for SL positioning;
a User Equipment-Aggregate Maximum Bit Rate (UE-AMBR) on a PC5 interface; or
cross-Radio Access Technology (cross-RAT) PC5 control authorization.

20. The method according to claim 17, further comprising:
in the case that the UE is authorized for SL positioning, when an Xn handover occurs at the UE, sending a handover request to a target base station, wherein the handover request carries at least one of the following:
a service authorization indication;
location information of a valid area;
QoS parameters for an SL positioning;
QoS parameters for SL communication between UEs for SL positioning;
a UE-AMBR on a PC5 interface; or
cross-RAT PC5 control authorization.

21. A sidelink (SL) positioning authorization apparatus, applied to a User Equipment (UE), comprising a transceiver and a processor, wherein
the transceiver is configured to send first capability information to a first core network function, and the first capability information indicates that the UE supports SL positioning.

22. A sidelink (SL) positioning authorization apparatus, applied to a first core network function, comprising a transceiver and a processor, wherein
the transceiver is configured to receive first capability information sent by the UE, and the first capability information indicates that the UE supports SL positioning;
the processor is configured to authenticate the first capability information of the UE, and send a first service authorization indication to a base station to indicate SL positioning authorization information of the UE.

23. A sidelink (SL) positioning authorization apparatus, applied to a base station, comprising a transceiver and a processor, wherein
the transceiver is configured to receive a first service authorization indication sent by a first core network function, wherein the first service authorization indication indicates SL positioning authorization information of the UE.

24. A sidelink (SL) positioning authorization apparatus, comprising a memory, a processor, and a computer program stored in the memory and used to be executed by the processor; wherein the processor is configured to execute the program to implement the steps of the SL positioning authorization method according to any one of claims 1 to 20.

25. A computer-readable storage medium storing a computer program, wherein the program is used to be executed by a processor to implement the steps of the sidelink (SL) positioning authorization method according to any one of claims 1 to 20.
